# FASCICULE DE BREVET EUROPEEN

(11) **EP 2 729 533 B1**
(45) Date de publication et mention de la délivrance du brevet: **14.10.2020**
(21) Numéro de dépôt: 12750405.8
(22) Date de dépôt: 06.07.2012
(51) Int. Cl.: C08L 83/06, B01J 31/02, C09D 183/06, A61F 13/02, C08J 7/04, C08L 83/04, C08K 5/3445, C08K 5/3472, C08J 3/24, C08G 77/08, C09D 183/04

(54) **UTILISATIONS DE CARBENES EN SOLUTION COMME CATALYSEURS DE POLYCONDENSATION D'ORGANOPOLYSILOXANES**
VERWENDUNG VON CARBENEN IN EINER LÖSUNG ALS ORGANOPOLYSILOXAN-POLYKONDENSATIONSKATALYSATOREN
USES OF CARBENES IN SOLUTION AS ORGANOPOLYSILOXANE POLYCONDENSATION CATALYSTS

(30) Priorité: 07.07.2011 FR 1156171
(43) Date de publication de la demande: 14.05.2014
(73) Titulaire: ELKEM SILICONES France SAS, 69003 Lyon (FR)
(72) Inventeur: MALIVERNEY Christian, F-69690 Saint Julien sur Bibost (FR); SAINT-JALMES Laurent, F-69390 Vourles (FR)
(74) Mandataire: Mekki, Boualem
(86) Numéro de dépôt international: PCT/FR2012/000269
(87) Numéro de publication internationale: WO 2013/004925

(56) Documents cités:
- WO-A1-2010/149869
- FR-A1- 2 786 497
- FR-A1- 2 900 153
- US-A1- 2006 084 753
- US-A1- 2006 173 150
- US-A1- 2009 264 563
- SCHMIDT M A ET AL: "On the interactions of N,N'-bismesitylimidazolin-2-yl and alcohols", TETRAHEDRON LETTERS, ELSEVIER, AMSTERDAM, NL, vol. 49, no. 27, 30 juin 2008 (2008-06-30) , pages 4316-4318, XP022695672, ISSN: 0040-4039, DOI: 10.1016/J.TETLET.2008.04.091 [extrait le 2008-04-20]
- MOHAMMAD MOVASSAGHI ET AL: "N-Heterocyclic Carbene-Catalyzed Amidation of Unactivated Esters with Amino Alcohols", ORGANIC LETTERS, vol. 7, no. 12, 1 juin 2005 (2005-06-01), pages 2453-2456, XP055018304, ISSN: 1523-7060, DOI: 10.1021/ol050773y
- Anonymous: "POLY(DIMETHYLSILOXANE), SILANOL TERMINATED - DMS-S14", , 2005, pages 1-3, XP055018276, Extrait de l'Internet: URL:http://www.gelest.com/goods/pdf/msds/D MS-S14.pdf [extrait le 2012-02-02]

## Description

La présente invention concerne une composition organopolysiloxanique vulcanisable dès la température ambiante en élastomère, polymérisant ou réticulant par polycondensation et ne contenant pas de catalyseurs à base d'alkylétain qui présentent des problèmes de toxicité.

L'invention concerne aussi l'utilisation de nouvelle composition catalytique de polycondensation à structure carbène, stables en solution, comme catalyseurs de la réaction de polycondensation d'organopolysiloxanes.

Les formulations des élastomères réticulant par polycondensation font généralement intervenir une huile silicone, généralement un polydiméthylsiloxane, à terminaisons hydroxylées, éventuellement pré-fonctionnalisées par un silane de façon à présenter des extrémités alcoxy, un agent réticulant, un catalyseur de polycondensation, classiquement un sel d'étain ou un titanate d'alkyle, une charge de renfort et d'éventuels autres additifs comme des charges de bourrage, des promoteurs d'adhérence, des colorants, des agents biocides, etc.

Ces compositions organopolysiloxaniques vulcanisables dès la température ambiante sont bien connues et sont classées en 2 groupes distincts: les compositions monocomposants (RTV-1) et les compositions bicomposants (RTV-2).

Le terme "RTV" est l'acronyme pour "Room Température Vulcanising".

Lors de la réticulation, l'eau (soit apportée par l'humidité atmosphérique dans le cas des RTV-1, soit introduite dans une partie de la composition dans le cas des RTV-2) permet la réaction de polycondensation, qui conduit à la formation du réseau élastomérique.

Généralement, les compositions monocomposants (RTV-1) réticulent quand elles sont exposées à l'humidité de l'air, c'est-à-dire qu'elles ne peuvent réticuler dans un milieu confiné. Par exemple, les compositions silicones monocomposant utilisées comme mastics ou adhésifs réticulent à froid suivant un mécanisme d'hydrolyse de fonctions réactives du type acétoxysilane, cétiminoxysilane, alcoxysilane..., suivi par des réactions de condensation entre des groupements silanols formés et d'autres fonctions réactives résiduelles. L'hydrolyse est généralement effectuée grâce à la vapeur d'eau qui diffuse dans le matériau à partir de la surface exposée à l'atmosphère. Généralement, la cinétique des réactions de polycondensation est extrêmement lente; ces réactions sont donc catalysées par un catalyseur approprié. Comme catalyseurs utilisés, on fait appel le plus souvent à des catalyseurs à base d'étain, de titane, d'une amine ou des compositions de ces catalyseurs. Les catalyseurs à base d'étain (cf. notamment FR-A-2 557 582) et de titane (cf. notamment FR-A-2 786 497) sont des catalyseurs ayant une bonne efficacité.

Quant aux compositions bicomposants, elles sont commercialisées et stockées sous la forme de deux composantes, une première composante contenant les matériaux polymériques de base et la deuxième composante contenant le catalyseur. Les deux composantes sont mélangées lors de l'emploi et le mélange réticule sous la forme d'un élastomère relativement dur. Ces compositions à deux composantes sont bien connues et sont notamment décrites dans l'ouvrage de Walter Noll "Chemistry and Technology of Silicones" 1968, 2ème édition aux pages 395 à 398. Ces compositions comportent essentiellement 4 ingrédients différents:
- un polymère réactif α,ω-dihydroxydiorganopolysiloxane,
- un agent de réticulation, généralement un silicate ou un polysilicate,
- un catalyseur à l'étain, et
- de l'eau.

Le plus souvent, le catalyseur de condensation est à base d'un composé organique d'étain. En effet, de nombreux catalyseurs à base d'étain ont déjà été proposés comme catalyseur de réticulation de ces RTV-1 ou RTV-2. Des catalyseurs de polycondensation classiques comprennent des composés de dialkylétain, notamment des dicarboxylates de dialkylétain tels que le dilaurate et le diacétate de dibutylétain, les composés de titanate d'alkyle tels que le tétrabutyl ou le tétraisopropyltitanate et les chélates de titane (EP-A-0 885 933, US-5 519 104, US-A-4,515,932, US-A-4,563,498, US-A-4,528,353).

Cependant, les catalyseurs à base d'alkylétain, bien que très efficaces, le plus souvent incolores, liquides et solubles dans les huiles silicones présentent l'inconvénient d'être toxiques (CMR2 toxiques pour la reproduction).

Un autre aspect important pour un catalyseur de la réaction de polycondensation des organopolysiloxanes est le temps de mise en œuvre (« pot-life » ou « temps de travail »), c'est-à-dire le temps pendant lequel la composition peut être utilisée après mélange sans durcir. Ce temps doit être suffisamment long, pour permettre son utilisation mais suffisamment court pour obtenir un objet moulé manipulable au plus tard quelques minutes ou quelques heures après sa fabrication. Le catalyseur doit donc permettre d'obtenir un bon compromis entre le temps d'utilisation du mélange catalysé et le temps au bout duquel l'objet moulé est manipulable (ces temps dépendent de l'application visée comme par exemple le moulage ou la fabrication de joints). En outre le catalyseur doit conférer au mélange catalysé un temps d'étalement qui ne varie pas en fonction de la durée de stockage.

La demande FR 03 41232 concerne un procédé de préparation de polyorganosiloxane par polymérisation par ouverture de cycle(s) et/ou redistribution de polyorganosiloxane, en présence d'un catalyseur (ou amorceur) constitué par au moins un carbène nucléophile.

La demande FR 06 03563 concerne un procédé de polycondensation de polyorganosiloxanes utilisant également des catalyseurs à structure carbène.

Les catalyseurs carbènes décrits dans les deux demandes précitées, sont instables et doivent être en général soit utilisés sous une forme cristallisée, soit générés in-situ à partir de sels précurseurs. Or, les carbènes sont des espèces très réactives qui se dégradent à l'air libre ce qui implique de les conserver et de les manipuler sous atmosphère inerte.

Un des objectifs de la présente invention est de proposer un catalyseur pour la polycondensation des organopolysiloxanes qui est non toxique, stable à l'air libre pendant plusieurs mois et par conséquent facilement transportable ce qui permet une mise en œuvre industrielle aisée sans nécessiter des étapes supplémentaires pour le générer in-situ.

Un autre des objectifs de la présente invention est de proposer un catalyseur non toxique mais qui continue à répondre à la fois aux contraintes de conservation, de mise en œuvre et de polymérisation ou réticulation par polycondensation, tout en étant utilisable quel que soit le type de réticulant utilisé.

Un autre objectif de la présente invention est de proposer un nouveau catalyseur non toxique permettant une réticulation en surface mais aussi une réticulation à cœur la plus complète possible.

Un autre objectif de la présente invention est également de proposer de nouveaux catalyseurs permettant à des compositions polyorganosiloxanique de polymériser ou réticuler en présence d'humidité de l'air ou d'eau.

Un autre objectif de la présente invention est de proposer un nouveau catalyseur non toxique pour la polycondensation des organopolysiloxanes, peu coûteux à synthéthiser car il ne présente pas les contraintes des catalyseurs à structure carbène de l'art antérieur, notamment liées à leur instabilité, et nécessitant une synthèse en milieu anhydre et/ou une étape de purification par sublimation avec de très faible rendements.

Ces objectifs, parmi d'autres, sont atteints par la présente invention qui concerne tout d'abord une composition **X** polymérisable ou réticulable par polycondensation ne comprenant pas de catalyseurs à base d'alkylétain, précurseur d'élastomère à base de silicone comprenant:
- une base silicone **B** comprenant au moins une huile ou gomme polyorganosiloxane **C,** ladite huile ou gomme **C** étant (i) polymérisable ou réticulable par réaction de polycondensation et (ii) d'une viscosité dynamique comprise entre 10 mPa.s et 1,5x10⁶ mPa.s à 25°C; et,
- une composition catalytique **Y'** comprenant :
   a) une quantité catalytiquement efficace d'au moins un catalyseur de polycondensation **A** qui est un carbène de formule (II) ou (II') selon la revendication 1
   b) au moins un solvant comprenant au moins un alcool **G.**

Pour atteindre cet objectif, la Demanderesse a eu le mérite de mettre en évidence, de manière tout à fait surprenante et inattendue, que l'utilisation de carbène stable en solution permet de catalyser la réaction de polycondensation des organopolysiloxanes, pour la polymérisation ou la réticulation des compositions silicones précurseur d'élastomères, par exemple pour l'obtention de mastics ou de supports enduits.

Il est entendu que le terme « élastomère » est pris dans le sens qu'il lui est donné dans le domaine des silicones et qui décrit le produit obtenu après le durcissement d'une composition silicone sans aucune implication sur ses propriétés d'élasticité.

De préférence la composition catalytique est composé exclusivement d'un ou plusieurs alcool **G** et du catalyseur de polycondensation **A** selon l'invention. L'alcool **G** sera présent dans la composition catalytique **Y'** à raison d'au moins 50% poids par rapport au poids total de ladite composition catalytique **Y',** et de préférence d'au moins 55% poids et encore plus préférentiellement à raison d'au moins 60% poids par rapport au poids total de ladite composition catalytique **Y'.**

Des procédés de préparation de carbènes stables en solution dans un solvant comprenant au moins un alcool (solution alcoolique) sont décrits dans la demande WO2011083146. Un tel procédé consiste à préparer le carbène par déprotonation d'un sel précurseur à l'aide d'au moins une base forte éventuellement générée in situ, ladite déprotonation étant réalisée dans un solvant comprenant au moins un alcool.

Plus précisément, un procédé de préparation d'une composition catalytique **Y'** selon l'invention comprend les étapes suivantes:
a) on fait réagir, de préférence à une température comprise entre 0° C et 100° C, au moins une base forte, éventuellement générée in situ, avec au moins un composé **A'** précurseur du carbène de formule (II) ou (II'), ledit composé **A'** étant un sel comprenant une fonction iminium de structure (I') suivante: 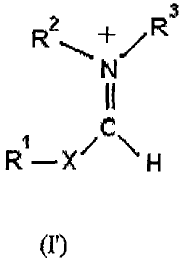 avec :
   - le symbole X étant choisi parmi le groupe constitué par les atomes ou groupements suivants: -O-, -S-, -N(R)- et -P(R)-, avec le symbole R étant un groupement en C₁-C₃₀,
   - les symboles R¹, R² et R³ étant des groupements éventuellement substitués, identiques ou différents, en C₁-C₃₀ et comprenant éventuellement un ou plusieurs atomes choisi(s) parmi le groupe constitué par : S, P, Si, N et O, et
   - les symboles X, R¹, R² et R³ pris deux à deux peuvent former un cycle à 5, 6 ou 7 chainons ;
avec comme conditions suivantes:
- le choix de la base forte s'effectue de manière à pouvoir effectuer une déprotonation de l'hydrogène de la fonction iminium de structure (I'), et
- la réaction s'effectue dans un solvant qui est un alcool ou un mélange d'alcool.

Avantageusement, cette déprotonation s'opère à température ambiante (20°C).

De préférence le composé **A'** est choisi parmi les composés de formule générale (III) ou (III') suivante : 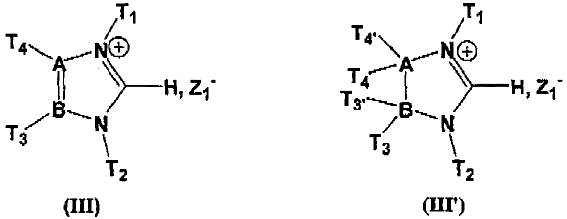 dans laquelle :
- Les symboles A et B représentent indépendamment un atome de carbone ou d'azote, étant entendu que :
   - dans la formule (III), lorsque le symbole A représente un atome d'azote, alors le symbole T₄ n'est pas présent et lorsque le symbole B représente un atome d'azote, alors le symbole T₃ n'est pas présent ;
   - dans la formule (III'), lorsque le symbole A représente un atome d'azote, alors le symbole T₄ ou T_{4'} n'est pas présent et lorsque le symbole B représente un atome d'azote, alors le symbole T₃ ou T_{3'} n'est pas présent ;
- les symboles T₃, T_{3'}, T₄ et T_{4'} représentent, indépendamment les uns des autres, un atome d'hydrogène; un groupement : alkyle, cycloalkyle éventuellement substitué par un groupe alkyle ou alkoxy, aryle éventuellement substitué par un groupe alkyle ou alkoxy, alcényle, alcynyle ou arylalkyle dans lequel la partie aryle est éventuellement substituée par un groupe alkyle ou alkoxy ;
- les symboles T₃ et T₄ peuvent former ensemble et avec A et B un aryle quand ceux-ci représentent chacun un atome de carbone, étant entendu que dans ce cas T_{3'} et T_{4'} ne sont pas présents;
- les symboles T₁ et T₂ représentent indépendamment :
   1) un groupement: alkyle, cycloalkyle éventuellement substitué par un alkyle, alkyle perfluoré ou éventuellement substitué par un groupement perfluoroalkyle, cycloalkyle éventuellement substitué par un groupe alkyle ou alkoxy, aryle éventuellement substitué par un groupe alkyle ou alkoxy, alcényle, alcynyle ou arylalkyle dans lequel la partie aryle est éventuellement substituée par un groupe alkyle ou alkoxy ; ou
   2) un radical monovalent de formule (IV) suivante :

      -V1-V2 (IV)

      dans laquelle :
      - le symbole V1 est un groupement divalent hydrocarboné saturé ou non, de préférence un alkylène linéaire ou ramifié en C₁-C₁₀, éventuellement substitué,
      - le symbole V2 est un groupement monovalent choisi dans le groupe des substituants suivants :
         ◆ alcoxy, -OR^{a} avec le symbole R^{a} correspondant à un atome d'hydrogène ou un groupement alkyle ou aryle ;
         ◆ silyl, -Si(OR^{b})ₓ(R^{c})₃₋ₓ avec le symbole R^{b} correspondant à un atome d'hydrogène, ou un groupement alkyle, silyle ou siloxanyle, le symbole R^{c} correspondant à un groupement alkyle, aryle et le symbole x étant un entier égal à 0, 1, 2 ou 3;
         ◆ amine, de préférence -N(R^{a})₂ avec le symbole R^{a} correspondant à un atome d'hydrogène ou un groupement alkyle ou aryle ;
- les substituants T₁, T₂, T₃, T_{3'}, T₄ et T_{4'} peuvent former deux à deux, lorsqu'ils sont situés sur deux sommets adjacents dans les formules (III) et (III'), une chaîne hydrocarbonée saturée ou insaturée,
- le symbole Z1 représente indépendamment un anion dérivé d'un acide de Brönsted (acide protique) de préférence choisi dans le groupe constitué par:
   - les acides carboxyliques de formule G°-COOH dans laquelle le symbole G° représente un alkyle, et avantageusement un alkyle en C₁-C₂₂ ; un aryle, avantageusement un aryle en C₆-C₁₈ éventuellement substitué par un ou plusieurs alkyle en C₁-C₆ ;
   - les acides sulfoniques de formule G^{o}-SO₃H dans laquelle le symbole G^{o} est tel que défini ci-dessus ;
   - les acides phosphoriques de formule Gₒ-PO₃H dans laquelle le symbole Gₒ est tel que défini ci-dessus ;
   - les acides minéraux suivants: HF, HCl, HBr, HI, H₂SO₄, H₃PO₄, HClO₄ et HBF₄ pris à eux seuls ou en combinaison entre eux ;
   - et leurs mélanges.

Concernant le sel (III), l'anion Z₁' est l'anion dérivé d'un acide de Brönsted (acide protique) organique ou minéral. Habituellement, l'anion Z₁⁻ est dérivé d'un acide présentant un pKa inférieur à 6. De préférence, Z₁⁻ dérive d'un acide de pKa inférieur à 4, mieux encore inférieur à 2. Les pKa dont il est question ici sont les pKa des acides tels que mesurés dans l'eau.

Des exemples d'acides sont les acides carboxyliques de formule:G°-COOH, dans laquelle le symbole G^{o} représente un groupement : alkyle, par exemple en C₁ à C₂₂; aryle, par exemple en C₆ à C₁₈, éventuellement substitué par un ou plusieurs alkyle, de préférence un ou plusieurs (C₁-C₆)alkyle ; les acides sulfoniques de formule : G^{o}-SO₃H, dans laquelle le symbole G^{o} est tel que défini ci-dessus ; et les acides phosphoniques de formule : G^{o}-PO₃H dans laquelle le symbole G^{o} est tel que défini ci-dessus ; d'autres acides sont HF, HCl, HBr, HI, H₂SO₄, H₃PO₄, HClO₄ et HBF₄.

Des exemples préférés d'acides carboxyliques sont l'acide acétique, l'acide benzoïque, et l'acide stéarique. A titre d'acide sulfonique préféré, on citera l'acide benzène sulfonique et à titre d'acide phosphonique préféré, on mentionnera l'acide phénylphosphonique.

On préfère plus particulièrement les anions Z₁⁻ dérivés des acides HCl, HI et HBF₄ et HPF₆.

Ainsi, des anions Z₁⁻ particulièrement préférés, sont les anions halogénure et le tétrafluoroborate et hexafluorophosphate.

On donne ci-dessous quelques exemples de sels d'imidazolium.

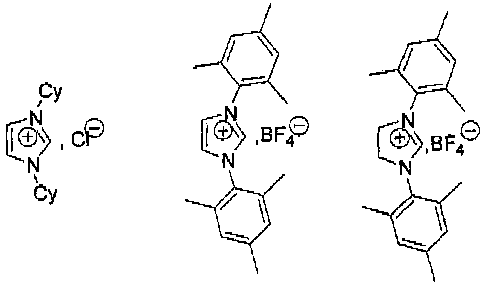

Ces consommables sont soit disponibles dans le commerce, soit facilement préparés par l'homme du métier à partir de composés commerciaux.

Une méthode de synthèse des sels de formule (III) dans laquelle A = B = C est décrite dans US-B-5 077 414.

Ce procédé comprend la réaction :
⇒ d'un composé α-dicarbonylé de formule (**V**) suivante : 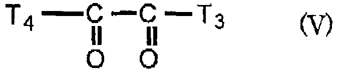 dans laquelle les symboles T₃ et T₄ sont tels que définis ci-dessus
⇒ avec HCHO et deux amines de formules T₁-NH₂ et T₂-NH₂, en présence d'un acide approprié. Les symboles T₁ et T₂ sont tels que définis ci-dessus.

La nature de l'anion Z1 dans les sels de formule (**III**) dépend de l'acide utilisé à cette étape. Les acides utilisables sont par exemple ceux énumérés ci-dessus et ceux dont dérive Z1.

D'autres méthodes de préparation des sels de formule (**III**) sont proposées dans Chem. Eur. J. 1996, 2, n° 12, pages 1627-1636 et Angew. Chem. Int. Ed. Engl. 1997, 36, 2162-2187.

La réaction pour la préparation des carbènes utilisés comme catalyseurs s'effectue dans un solvant comprenant au moins un alcool **G** ou mélange d'alcool **G** de sorte à obtenir des carbènes stables dans une solution à base d'alcool.

De préférence, l'alcool **G** présent dans ce solvant répond à la formule R°OH, dans laquelle R° correspond à un groupement : alkyle, cycloalkyle, aryle, alcényle, alcynyle, arylalkyle, silyle ou siloxane, et de préférence le symbole R° est choisi parmi le groupe constitué par: un méthyle, un éthyle, un propyle et un butyle.

Dans un mode de réalisation préféré pour la réaction de synthèse des carbènes en solution, la base forte est choisie dans le groupe des hydroxydes, des alcoolates, des hydrures ou des amidures alcalins ou alcalinoterreux, de préférence dans le sous-groupe comprenant : CH₃ONa, tertiobutylate de potassium, KOH, NaOH, CH₃CH₂OMgOCH₂CH₃ et leurs mélanges.

Selon une éventualité, cette base forte peut se former *in situ,* par exemple par ajout de sodium, ou d'hydrure de sodium, ou de magnésium dans l'alcool considéré. C'est ainsi que les alcoolates pouvant être générés in situ.

Avantageusement, la déprotonation produit un sel qui précipite et que l'on sépare de la solution de carbènes, ladite solution étant alors utilisable dans les procédés de l'invention décrits ci-après, composition catalytique **Y'.**

La composition catalytique **Y'** selon l'invention comprend un catalyseur de polycondensation **A** ayant pour formule (II) ou (II') : 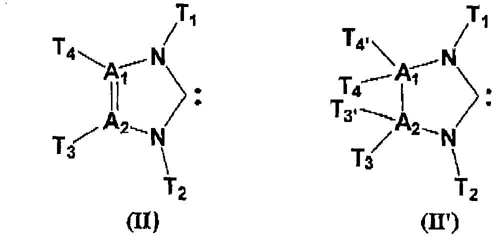 dans lesquelles :
- les symboles A₁ et A₂ représentent indépendamment un atome de carbone ou d'azote, étant entendu que:
   1) dans la formule (II), lorsque le symbole A₁ représente un atome d'azote, alors le symbole T₄ n'est pas présent et lorsque le symbole A₂ représente un atome d'azote, alors le symbole T₃ n'est pas présent; et
   2) dans la formule (II'), lorsque le symbole A₁ représente un atome d'azote, alors le symbole T₄ ou T_{4'} n'est pas présent et lorsque le symbole A₂ représente un atome d'azote N, alors le symbole T₃ ou T_{3'} n'est pas présent ;
- les symboles T₃, T₃ T₄ et T_{4'} représentent indépendamment un atome d'hydrogène ; un groupement : alkyle, cycloalkyle éventuellement substitué par un groupe alkyle ou alkoxy; aryle éventuellement substitué par un groupe alkyle ou alkoxy, alcényle, alcynyle ou arylalkyle dans lequel la partie aryle est éventuellement substituée par un groupe alkyle ou alkoxy ;
- les symboles T₃ et T₄ peuvent former ensemble et avec A₁ et A₂ quand ceux-ci représentent chacun un atome de carbone, un aryle étant entendu que dans ce cas T₃ et T_{4'} ne sont pas présents;
- les symboles T₁, T₂, T₃, T_{3'}, T₄ et T_{4'} peuvent former deux à deux, lorsqu'ils sont situés sur deux sommets adjacents dans les formules (II) et (II'), une chaîne hydrocarbonée saturée ou insaturée, et
- les symboles T₁ et T₂ représentent indépendamment l'un de l'autre:
   1) un groupement : alkyle, un cycloalkyle éventuellement substitué par un groupe alkyle, alkyle perfluoré ou éventuellement substitué par un groupement perfluoroalkyle, cycloalkyle éventuellement substitué par un groupe alkyle ou alkoxy; aryle éventuellement substitué par un groupe alkyle ou alkoxy, alcényle, alcynyle ou arylalkyle dans lequel la partie aryle est éventuellement substituée par un groupe alkyle ou alkoxy ; ou
   2) un radical monovalent de formule (IV) suivante :

      -V1-V2 (IV)

      dans laquelle:
      - V1 est un groupement divalent hydrocarboné saturé ou non, de préférence un alkylène linéaire ou ramifié en C₁-C₁₀, éventuellement substitué, et
      - V2 est un groupement monovalent choisi dans le groupe constitué par les substituants suivants :
         - alcoxy, -OR^{a} avec le symbole R^{a} correspondant à un atome d'hydrogène ou un groupement alkyle ou aryle ;
         - silyl, -Si(OR^{b})ₓ(R^{c})₃₋ₓ avec le symbole R^{b} correspondant à un atome d'hydrogène, un groupement alkyle, silyle ou siloxanyle, avec le symbole R^{c} correspondant à un groupe alkyle ou aryle et le symbole x étant un nombre entier égal à 0, 1, 2 ou 3; et
         - amine, de préférence -N(R^{a})₂ avec le symbole R^{a} correspondant à un atome d'hydrogène ou à un groupement alkyle ou aryle.

Par alkyle, on désigne une chaîne hydrocarbonée saturée, linéaire ou ramifiée, éventuellement substituée (e.g. par un ou plusieurs alkyles), de préférence de 1 à 10 atomes de carbone, par exemple de 1 à 8 atomes de carbone, mieux encore de 1 à 7 atomes de carbone.

Des exemples de groupements alkyle sont notamment méthyle, éthyle, isopropyle, n-propyle, tert-butyle, isobutyle, n-butyle, n-pentyle, isoamyle et 1,1-diméthylpropyle. La partie alkyle du groupement alcoxy est telle que définie ci-dessus.
Le groupement alkyle perfluoré ou éventuellement substitué par un groupement perfluoroalkyle correspond, de préférence, à la formule :

-(CH₂)ₚ-C_{q}F_{2q+1}

dans laquelle le symbole p représente 0, 1, 2, 3 ou 4 ; le symbole q est un entier de 1 à 10; et C_{q}F_{2q+1} est linéaire ou ramifié. Des exemples préférés de ce groupement sont : -(CH₂)₂-(CF₂)₅-CF₃ et -(CF₂)₇-CF₃.

L'expression aryle désigne un groupement hydrocarboné aromatique, ayant de 6 à 18 atomes de carbone, monocyclique ou polycyclique et de préférence monocyclique ou bicyclique. Il doit être entendu que, dans le cadre de l'invention, par groupement aromatique polycyclique, on entend un groupement présentant deux ou plusieurs noyaux aromatiques, condensés (orthocondensés ou ortho et péricondensés) les uns aux autres, c'est-à-dire présentant, deux à deux, au moins deux carbones en commun.

Ledit groupement hydrocarboné aromatique ("aryle") est éventuellement substitué par exemple par un ou plusieurs alkyles en C₁-C₃, un ou plusieurs groupements hydrocarbonés halogénés (e.g. CF₃), un ou plusieurs alcoxy (e.g. CH₃O) ou un ou plusieurs groupements hydrocarbonés comprenant un ou plusieurs motifs cétone (e.g. CH₃CO-),

A titre d'exemple d'aryle, on peut mentionner les radicaux phényle, naphtyle, anthryle et phénanthryle.

L'expression arylalkyle désigne un groupement alkyle tel que défini ci-dessus, substitué par un ou plusieurs groupements aryle sur sa chaîne hydrocarbonée, le groupement aryle étant tel que défini ci-dessus, Des exemples en sont benzyle et triphénylméthyle.

Par cycloalkyle, on entend un groupement hydrocarboné saturé mono- ou polycyclique, de préférence mono- ou bicyclique, présentant préférablement de 3 à 10 atomes de carbone, mieux encore de 3 à 8. Par groupement hydrocarboné saturé polycyclique, on entend un groupement présentant deux ou plusieurs noyaux cycliques rattachés les uns aux autres par des liaisons σ ou/et condensés deux à deux. Des exemples de groupements cycloalkyle polycycliques sont adamantane et norbornane. Des exemples de groupements cycloalkyle monocycliques sont cyclopropyle, cyclobutyle, cyclopentyle, cyclohexyle, cycloheptyle et cyclooctyle.

Par alcényle, on entend une chaîne hydrocarbonée insaturée, linéaire ou ramifiée, substituée ou non, présentant au moins une double liaison oléfinique, et plus préférablement une seule double liaison. De préférence, le groupement alcényle présente de 2 à 8 atomes de carbone, mieux encore de 2 à 6. Cette chaîne hydrocarbonée comprend éventuellement au moins un hétéroatome tel que O, N, S. Des exemples préférés de groupements alcényle sont les groupements allyle et homoallyle.

Par alcynyle, on entend selon l'invention, une chaîne hydrocarbonée insaturée, linéaire ou ramifiée, substituée ou non, présentant au moins une triple liaison acétylénique, et plus préférablement une seule triple liaison. De préférence, le groupement alcynyle présente de 2 à 8 atomes de carbone, mieux encore de 2 à 6 atomes de carbone. A titre d'exemple, on peut citer le groupement acétylényle, ainsi que le groupement propargyle. Cette chaîne hydrocarbonée comprend éventuellement au moins un hétéroatome tel que O, N, S.

Par silyle, on entend selon l'invention, un groupement linéaire ou ramifié contenant au moins un atome de silicium. Les chaînes polydiméthylsiloxane sont des exemples de groupements silyle.

Les carbènes de formule (II) et (II') peuvent présenter au moins deux noyaux condensés, c'est-à-dire que deux groupements au moins parmi T₁, T₂, T₃, T_{3'}, T₄ et T_{4'} situés sur deux sommets adjacents, forment ensemble une chaîne hydrocarbonée saturée ou insaturée, présentant de préférence de 3 à 6 atomes de carbones. Par chaîne hydrocarbonée saturée ou insaturée, on entend une chaîne hydrocarbonée linéaire ou ramifiée pouvant présenter ou non une ou plusieurs insaturations de type double liaison oléfinique ou triple liaison acétylénique.

Concernant les formes préférées de réalisation dans les formules (II) ou (II'), ce sont des formes dans lesquelles le symbole A₁ = A₂ = atome de carbone dans la formule (II) donnée supra.

Des significations préférées pour les symboles T1 et T2 dans cette formule (II) sont :
- alkyle, en particulier n-propyle, n-pentyle, néo-pentyle (-CH₂-C(CH₃)₃) ;
- cycloalkyle, en particulier cyclopentyle, cyclohexyle ou adamantyle ;
- alcényle, en particulier allyle (-CH₂-CH=CH₂), méthallyle (-CH₂-C(CH₃)=CH₂) ;
- alcynyle, en particulier propargyle, homopropargyle (-(CH₂)₂-C≡CH) ;
- ou groupement monovalent (V) défini supra, en particulier :

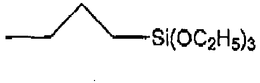

Toujours dans la formule (**II**) et de préférence, les symboles T₃ et T₄ correspondent tous deux à l'hydrogène ou forment ensemble un aryle, et mieux encore un phényle.

A titre d'exemples de carbènes, on peut citer ceux décrits dans le tableau 2, page 48 de la publication "Bourissou et al. Chem. Rev. 2000, 100, 39-91".

La quantité de catalyseur de polycondensation A selon l'invention peut être comprise entre 0,1 et 10 % en poids de la masse totale de la composition **X** selon l'invention, de préférence entre 0,1 et 5 % poids.

Toutes les viscosités dont il est question dans le présent mémoire correspondent à une grandeur de viscosité dynamique qui est mesurée, de manière connue en soi, à 25°C. Les viscosités sont mesurées à l'aide d'un viscosimètre BROOKFIELD selon les indications de la norme AFNOR NFT 76-102. Ces viscosités correspondent à une grandeur de viscosité dynamique à 25°C dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

### Description de la base silicone B :

Les bases silicone utilisées dans la présente invention réticulant ou durcissant par des réactions de polycondensation sont bien connues. Ces bases sont décrites en détail en particulier dans de nombreux brevets et elles sont disponibles dans le commerce.

Les éléments contenus dans les bases silicones peuvent être conditionnées en plusieurs emballages, de sorte à séparer certains éléments pour éviter une réaction anticipée ou défavorable avant utilisation. Par exemple, les bases silicones peuvent être conditionnées en au moins deux fractions, une fraction ne comprenant que le catalyseur de polycondensation **A** dans une solution alcoolique et une ou plusieurs fractions séparées comprenant les autres réactifs de la composition **X.**

La base silicone **B** utilisée pour réaliser la composition selon l'invention peut comprendre:
- au moins une huile ou gomme polyorganosiloxane **C** polymérisable ou réticulable par polycondensation en un élastomère et d'une viscosité dynamique à 25°C comprise entre 10 mPa.s et 1,5x10⁶ mPa.s;
- éventuellement au moins un agent de réticulation **D;**
- éventuellement au moins un promoteur d'adhérence **E;** et
- éventuellement au moins une charge minérale siliceuse, organique et/ou non siliceuse **F.**

L'huile polyorganosiloxane ou gomme **C** est de préférence un polymère α,ω-dihydroxypolydiorganosiloxane de viscosité dynamique à 25°C comprise entre 10 et 1 500 000 mPa.s et dont les radicaux organiques sont des radicaux hydrocarbonés, de préférence choisi parmi le groupe constitué par : les alkyles ayant de 1 à 20 atomes de carbone ; les cycloalkyles ayant de 3 à 8 atomes de carbone ; les alcényles ayant de 2 à 8 atomes de carbone et les cycloalcényles ayant 5 à 8 atomes de carbone.

Dans un mode de réalisation spécifique des compositions **X** selon l'invention, l'huile ou gomme polyorganosiloxane **C** peut comprendre également au moins deux groupes fonctionnels de type hydroxy, alcoxy, oxime, acyle et/ou énoxy et de préférence au moins deux groupes fonctionnels silanol.

L'agent de réticulation **D** est de préférence un composé organosilicié portant plus de deux groupes hydrolysables liés aux atomes de silicium par molécule.

Comme agent de réticulation **D** on peut citer :
- les silanes de formule générale suivante :

   R¹ₖ Si(OR²)₍₄₋ₖ₎

   dans laquelle les symboles R², identiques ou différents, représentent des radicaux alkyles ayant de 1 à 8 atomes de carbone, tels que les radicaux méthyle, éthyle, propyle, butyle, pentyle, éthyl-2 hexyle, des radicaux oxyalkylènes en C₃-C₆, le symbole R¹ représente un groupe hydrocarboné aliphatique saturé ou insaturé, linéaire ou ramifié, un groupe carbocyclique, saturé ou insaturé et/ou aromatique, monocyclique ou polycyclique et k est égal à 0, 1 ou 2 ; et
- les produits d'hydrolyse partielle de ce silane.

Comme exemple de radicaux alcoxyalkylène en C₃-C₆ on peut citer les radicaux suivants :

CH₃OCH₂CH₂-

CH₃OCH₂CH(CH₃)-

CH₃OCH(CH₃)CH₂-

C₂H₅OCH₂CH₂CH₂-

Dans un mode de réalisation spécifique, le symbole R¹ peut également représenter un radical hydrocarboné en C₁-C₁₀ englobant:
- les radicaux alkyles en C₁-C₁₀ tels que les radicaux méthyle, éthyle, propyle, butyle, pentyle, éthyl-2 hexyle, octyle, décyle,
- les radicaux vinyle, allyle, et
- les radicaux cycloalkyles ce C₅-C₈ tels que les radicaux phényle, tolyle et xylyle.

Les agents de réticulation **D** sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Parmi les agents de réticulation **D,** on préfère plus particulièrement les alkyltrialcoxysilanes, les silicates d'alkyle et les polysilicates d'alkyle, dans lesquels les radicaux organiques sont des radicaux alkylés ayant de 1 à 4 atomes de carbone.

Comme autres exemples d'agents de réticulation **D** qui peuvent être utilisés, on cite plus particulièrement les silanes suivants :
- le propyltriméthoxysilane,
- le méthyltriméthoxysilane,
- l'éthyltriméthoxysilane,
- le vinyltriméthoxysilane,
- le vinyltriéthoxysilane,
- le méthyltriéthoxysilane,
- le propyltriéthoxysilane,
- le tétraéthoxysilane,
- le tétrapropoxysilane,
- le 1,2-bis(triméthoxysilyl)éthane,
- le 1,2-bis(triéthoxysilyl)éthane, et
- le tétraisopropoxysilane, ou encore: CH₃Si(OCH₃)₃ ; C₂H₅Si(OC₂H₅)₃ ; C₂H₅Si(OCH₃)₃ CH₂=CHSi(OCH₃)₃; CH₂=CHSi(OCH₂CH₂OCH₃)₃ C₆H₅Si(OCH₃)₃ ; [CH₃][OCH(CH₃)CH₂OCH₃]Si[OCH₃]₂ Si(OCH₃)₄ ; Si(OC₂H₅)₄; Si(OCH₂CH₂CH₃)₄; Si(OCH₂CH₂CH₂CH₃)₄ Si(OC₃H₄OCH₃)₄ ; CH₃Si(OC₂H₄OCH₃)₃ ; CICH₂Si(OC₂H₅)₃ ;

De manière encore plus préféré, l'agent de réticulation **D** est choisi parmi le groupe constitué par
- le vinyltriméthoxysilane,
- le vinyltriéthoxysilane,
- le méthyltriéthoxysilane,
- le propyltriéthoxysilane,
- le tétraéthoxysilane,
- le 1,2-bis(triéthoxysilyl)éthane,
- C₂H₅Si(OC₂H₅)₃, et
- Si(OC₂H₅)₄.

Comme autres exemples d'agent de réticulation **D,** on peut citer le polysilicate d'éthyle, ou le polysilicate de n-propyle.

On utilise généralement de 0,1 à 60 parties en poids d'agent de réticulation **D** pour 100 parties en poids d'huile ou gomme polyorganosiloxane **C.**

Dans un mode de réalisation préféré, l'agent de réticulation **D** est une résine silicone **H** dont la teneur pondérale en fonction hydroxyle est comprise entre 0,1 et 20% en poids.

Le promoteur d'adhérence **E** éventuellement présent dans les compositions selon l'invention peut être choisi par exemple parmi les composés organosiliciques portant à la fois :
(1) un ou des groupes hydrolysables liés à l'atome de silicium, et
(2) un ou des groupes organiques substitués par des radicaux comprenant un atome d'azote ou choisis dans le groupe des radicaux (méth)acrylate, époxy, et alcényle, et plus préférentiellement encore dans le groupe constitué par les composés suivants pris seul ou en mélange:
   vinyltriméthoxysilane (VTMO),
   3-glycidoxypropyl-triméthoxysilane (GLYMO),
   méthacryloxypropyltriméthoxysilane (MEMO),
   [H₂N(CH₂)₃]Si(OCH₂CH₂CH₃)₃,
   [H₂N(CH₂)₃]Si(OCH₃)₃
   [H₂N(CH₂)₃]Si(OC₂H₅)₃
   [H₂N(CH₂)_{4]}Si(OCH₃)₃
   [H₂NCH₂CH(CH₃)CH₂CH₂]SiCH₃(OCH₃)₂
   [H₂NCH₂]Si(OCH₃)₃
   [n-C₄H₉-HN-CH₂]Si(OCH₃)₃
   [H₂N(CH₂)₂NH(CH₂)₃]Si(OCH₃)₃
   [H₂N(CH₂)₂NH(CH₂)₃]Si(OCH2CH₂OCH₃)₃
   [CH₃NH(CH₂)₂NH(CH₂)₃]Si(OCH₃)₃
   [H(NHCH₂CH₂)₂NH(CH₂)₃]Si(OCH₃)₃ 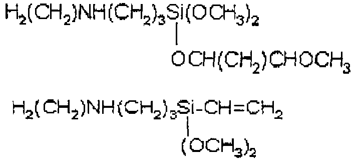 ou des oligomères polyorganosiloxaniques contenant de tels groupes organiques à une teneur supérieure à 20%.

On peut utiliser comme charges minérales **F** des produits très finement divisés dont le diamètre particulaire moyen est inférieur à 0,1 µm. Parmi ces charges figurent les silices de combustion et les silices de précipitation; leur surface spécifique BET est généralement supérieure à 40 m²/g. Ces charges peuvent également se présenter sous la forme de produits plus grossièrement divisés, de diamètre particulaire moyen supérieur à 0,1 µm. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 m²/g.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être constituées d'un mélange de plusieurs types de charges de granulométrie différente; ainsi par exemple, elles peuvent être constituées de 30 à 70 % de silices finement divisées de surface spécifique BET supérieure à 40 m² /g et de 70 à 30 % de silices plus grossièrement divisées de surface spécifique inférieure à 30 m²/g.

L'introduction des charges peut permettre de conférer de bonnes caractéristiques mécaniques et rhéologiques aux élastomères découlant du durcissement des compositions conformes à l'invention.

En combinaison avec ces charges peuvent être utilisés des pigments minéraux et/ou organiques ainsi que des agents améliorant la résistance thermique (sels et oxydes de terres rares tels que les oxydes et hydroxydes cériques) et/ou la résistance à la flamme des élastomères. Par exemple on peut utiliser les coktails d'oxyde décrits dans la demande internationale WO 98/29488. Parmi les agents améliorant la résistance à la flamme peuvent être cités les dérivés organiques halogénés, les dérivés organiques du phosphore, les dérivés du platine tels que l'acide chloroplatinique (ses produits de réaction avec des alcanols, des éthers-oxydes), les complexes chlorure platineux-oléfines. Ces pigments et agents représentent ensemble au plus 20 % du poids des charges.

D'autres agents auxiliaires et additifs usuels peuvent être incorporés à la composition selon l'invention; ceux-ci sont choisis en fonction des applications dans lesquelles sont utilisées lesdites compositions.

La base silicone utilisée pour réaliser la composition selon l'invention peut comprendre:
- pour 100 parties d'huile polyorganosiloxane **C** susceptible de réticuler par polycondensation en un élastomère ;
- de 0 à 20 parties d'un agent de réticulation **D;**
- de 0 à 20 parties d'un promoteur d'adhérence **E;** et
- de 0 à 50 parties de charge **F.**

Outre les constituants principaux, des polymères polyorganosiloxanes linéaires non réactif **G'** peuvent être introduits dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactif **G'** sont bien connus; ils comprennent plus spécialement: des polymères α,ω-bis(triorganosiloxy)diorganopolysiloxanes de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle et phényle, 60 % au moins de ces radicaux organiques étant des radicaux méthyle et 10 % au plus étant des radicaux vinyle. La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles α,ω-bis(triméthylsiloxy) diméthylpolysiloxanes de viscosité allant de 10 mPa.s à 1 000 mPa.s à 25°C. Ces polymères qui jouent le rôle de plastifiants peuvent être introduits à raison d'au plus 70 parties, de préférence de 5 à 20 parties, pour 100 parties de d'huile ou gomme polyorganosiloxane **C** susceptible de polymériser ou réticuler par polycondensation.

Les compositions selon l'invention peuvent en outre avantageusement comprendre au moins une résine silicone **H.** Ces résines silicones sont des polymères organopolysiloxanes ramifiés bien connus et disponibles dans le commerce. Elles présentent, par molécule, au moins deux motifs différents choisis parmi ceux de formule R"'₃SiO_{1/2} (motif M), R"₂SiO_{2/2} (motif D), R"'SiO_{3/2} (motif T) et SiO_{4/2} (motif Q). Les radicaux R"' sont identiques ou différents et sont choisis parmi les radicaux alkyles linéaires ou ramifiés, les radicaux vinyle, phényle, trifluoro-3,3,3 propyle. De préférence, les radicaux alkyles présentent de 1 à 6 atomes de carbone inclus. Plus particulièrement, on peut citer comme radicaux R alkyle, les radicaux méthyle, éthyle, isopropyle, tertiobutyle et n-hexyle. Ces résines sont de préférence hydroxylées et ont dans ce cas une teneur pondérale en groupe hydroxyle comprise entre 5 et 500 meq/100 g.

Comme exemple de résines, on peut citer les résines MQ, les résines MDQ, les résines TD et les résines MDT.

Lorsque la résine silicone **H** est utilisée également à titre d'agent de réticulation **D,** on choisira de préférence, une résine silicone à fonctions silanol comprenant par molécule au moins un motif siloxyle M = R'₃SiO_{1/2} et/ou un motif siloxyle D = R'₂SiO_{2/2} en association avec au moins un motif siloxyle T = R'SiO_{3/2} et/ou un motif siloxyle Q = SiO_{4/2} ; les radicaux R' étant choisis parmi le groupe constitué par les groupements méthyle, éthyle, isopropyle, tertiobutyle et n-hexyle.

Les compositions X selon l'invention sont utilisables dans la préparation d'élastomères, notamment d'élastomères sous forme de gels, mastics et/ou enduits de revêtement en couche mince.

Pour obtenir de tels élastomères, on mélange, de préférence à l'abri de l'humidité les divers constituants fondamentaux de la composition auxquels sont ajoutés, le cas échéant, les adjuvants et additifs.

Ainsi il est possible de mélanger tout d'abord les huiles organopolysiloxanes **C** et les charges **F** et d'ajouter ensuite à l'empâtage obtenu, les réticulants **D,** les composés **E** et le la composition catalytique **Y'.** Il est également possible de mélanger les huiles **C,** les réticulants **D,** les composés **E** et les charges **F** et d'ajouter ultérieurement la composition catalytique **Y'.** Au cours de ces opérations, les mélanges peuvent être chauffés à une température comprise dans l'intervalle 40-180°C, par exemple entre 40 et 130°C, sous la pression atmosphérique ou sous une pression réduite afin de favoriser le départ de matières volatiles.

Après le dépôt des compositions telles quelles, sur des substrats solides, en atmosphère humide, on constate qu'un processus de durcissement en élastomères se met en œuvre.

Les compositions peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

Les compositions et/ou élastomères obtenus selon l'invention peuvent être employées pour de multiples applications comme le jointoiement et/ou le collage dans l'industrie du bâtiment, l'industrie du transport (exemples : automobile, aérospatiale, ferroviaire, maritime et aéronautique), l'assemblage des matériaux les plus divers (métaux, matières plastiques, caoutchoucs naturels et synthétiques, bois, cartons, polycarbonate, faïence, brique, céramique, verre, pierre, béton et éléments de maçonnerie), l'isolation de conducteurs électriques, l'enrobage de circuits électroniques et la préparation de moules servant à la fabrication d'objets en résines ou mousses synthétiques.

La composition précurseur d'élastomère selon l'invention, est utilisable notamment comme base d'enduction pour la réalisation de revêtements par exemple, anti-adhérent et/ou à caractère hydrofuge ou pour la réalisation de pansements ou de patch.

Un autre objet de l'invention est un élastomère obtenu par réticulation ou durcissement d'une composition **X** précurseur selon l'invention et telle que définie ci-dessus.

Un autre objet de l'invention consiste en l'utilisation d'au moins une composition catalytique **Y'** selon l'invention et telle que définie ci-dessus pour la synthèse d'élastomères silicone à partir d'une base silicone comprenant une huile ou gomme **B** polymérisable ou réticulable par réaction de polycondensation et d'une viscosité dynamique à 25°C comprise entre 10 mPa.s et 1,5x10⁶ mPa.s.

Aussi, l'invention concerne également un procédé de préparation d'un support enduit **Y** comprenant les étapes a), b) et c) suivantes :
a) on prépare une composition **X** précurseur d'élastomère à base de silicone telle que définie plus haut,
b) puis on dépose de manière continue ou discontinue ladite composition **X** précurseur d'élastomère à base de silicone sur un support souple qui peut être en textile, en papier, en polychlorure de vinyle, en polyester, en polypropylène, en polyamide, en polyéthylène, en polyuréthane, en tissus de fibres de verre non tissés, ou en polyéthylène téréphtalate et
c) on laisse réticuler ladite composition **X** éventuellement en chauffant à une température comprise entre 40°C et 130°C de manière à durcir ladite composition **X** et ainsi obtenir le support enduit **Y.**

Avantageusement, dans un tel procédé, la composition **X** comprend
- au moins une huile ou gomme polyorganosiloxane C, ladite huile ou gomme **C** étant (i) réticulable par réaction de polycondensation et (ii) d'une viscosité dynamique à 25°C comprise entre 10 mPa.s et 1,5x10⁶ mPas.s; et
- un agent de réticulation **D** qui est une résine silicone dont la teneur pondéral en fonction hydroxyle est comprise entre 0,1 et 20% en poids.

Conformément à ce procédé, les compositions peuvent être appliquées à l'aide de dispositifs utilisés sur les machines industrielles d'enduction du papier tels qu'une tête d'enduction à cinq rouleaux, des systèmes à lames d'air ou à barre égalisatrice, sur des supports ou matériaux souples, puis durcies par circulation dans des fours-tunnels chauffés, par exemple à une température comprise entre 40 et 130°C, par exemple entre 100 et 110°C.

Lesdites compositions peuvent être déposées sur tout matériau ou substrat souple tel que papiers de types divers (supercalendré, couché, glassine), cartons, feuilles de cellulose, feuilles en métal, films de matière plastique (polyester, polyéthylène, polypropylène...).

Les quantités de compositions déposées sont de l'ordre de 0,5 à 2 g par m² de surface à traiter, ce qui correspond au dépôt de couches de l'ordre de 0,5 à 2 µm.

Les matériaux ou supports ainsi enduits peuvent ultérieurement être mis en contact avec des matières adhésives quelconques caoutchoucs, acryliques ou autres, sensibles à la pression. La matière adhésive est alors aisément détachable dudit support ou matériau.

Les supports souples revêtus d'un film silicone peuvent être par exemple:
- un ruban adhésif dont la face interne est enduite d'une couche d'adhésif sensible à la pression et dont la face externe comporte le revêtement silicone;
- ou un papier ou un film polymère de protection de la face adhésive d'un élément autocollant ou adhésif sensible à la pression ;
- ou un film polymère du type polychlorure de vinyle (PVC), Polypropylène, Polyéthylène ou Polyéthylènetéréphtalate.

Dans un mode de réalisation spécifique, le support enduit Y est un pansement.

Les compositions selon l'invention sont également utiles dans le domaine des revêtements anti-adhérents sur les peintures, de l'encapsulation de composants électriques et électroniques, des revêtements pour textiles, ainsi que dans le domaine du gainage de fibres optiques.

L'invention a également pour objet tous revêtements obtenus par réticulation et/ou polymérisation de la composition **X** selon l'invention et telle que définie ci-dessus. Ces revêtements peuvent être de type vernis, revêtement adhésif, revêtement anti-adhérent et/ou encre.

L'invention vise également :
- tous articles constitués d'un matériau solide dont une surface au moins est revêtue de la composition **X** susvisée réticulée et/ou polymérisée thermiquement ;
- ainsi qu'une mousse silicone réticulée obtenue par réticulation d'une composition **X** susvisé.

D'autres avantages et caractéristiques de la présente invention apparaîtront à la lecture des exemples suivants donnés à titre illustratif et nullement limitatif.

### EXEMPLES :

### 1) Désalcoxypolycondensation catalysée par les carbènes N-hétérocycliques (NHC) et comparaison avec les sels d'étain à température ambiante.

Test RTV1 pour des compositions mono-composantes: On mélange une huile polydiméthylsiloxane bloquée à chacune de ses extrémités par un motif vinyldiméthoxysilyl, préparée à partir d'une huile polydiméthylsiloxane α,ω-dihydroxylée de viscosité de 100 mPa.s et de vinyltriméthoxysilane (VTMO) en présence de lithine comme catalyseur de fonctionnalisation, avec un catalyseur de polycondensation qui est soit le dilaurate de dibutylétain (DLDBE) soit une composition catalytique selon l'invention formée à partir du carbène NHC-^{t}Bu (1,3-di-tert-butylimidazolinylydène) en solution à 30% poids dans le méthanol.

TEST RTV2 pour des compositions bi-composantes: On mélange une huile polydiméthylsiloxane α,ω-dihydroxylée de viscosité 100 mPa.s avec du silicate d'éthyle (ratio molaire Si(OEt)4/OH=1) ou le même poids de silicate d'éthyle précondensé et avec comme catalyseur de polycondensation soit le dilaurate de dibutylétain (DLDBE) soit une composition catalytique selon l'invention comprenant le carbène NHC-^{t}Bu en solution à 30% poids dans le méthanol.

La quantité de catalyseur DLDBE utilisée dans les tests est de 0,5 mol de catalyseur par mol d'OH apporté par l'huile soit 1.24 mmol de DLDBE pour 4.5 g d'huile polydiméthylsiloxane α,ω-dihydroxylée contenant 0,55 mmol de OH par gramme.

Dans le cas des compositions catalytiques selon l'invention des essais avec 0,02, 0,1 et 0,2 mol de carbène par mol de OH ont été réalisés.

Le tableau 1 présente le temps de réaction nécessaire pour obtenir le même degré de désalcoxypolycondensation pour chaque essai.

**Tableau 1 : Temps de réaction nécessaire pour obtenir le même degré de désalcoxypolycondensation**

| Essai | Catalyseur | mol catalyseur/ mol OH | Test RTV2 réticulant = Si(OEt)₄ | Test RTV 1 |
|---|---|---|---|---|
| 1 | DLDBE | 0,5 | 1h10 | 0h30 |
| 2 | NHC-tBu | 0,02 | 1h30* | 24h |
| 3 | NHC-tBu | 0,1 | 0h03 | 5h |
| 4 | NHC-tBu | 0,2 | | 1h40 |

| | | | | |
|---|---|---|---|---|
| * 1h avec silicate d'éthyle précondensé | | | | |

Ces essais montrent que la composition catalytique selon l'invention (carbène NHC-tBu en solution à 30% poids dans le méthanol) est un très bon catalyseur en RTV2 car avec 0,1 mol de carbène par mol de OH on obtient en 3 minutes un taux de conversion comparable à celui obtenu en 1h10 avec 0,5 mol de catalyseur étain par mol de OH.

Pour les tests RTV 1, en passant de 0,5 mol de catalyseur étain par mol de OH à 0,2 mol de catalyseur carbène par mol de OH (le nombre de moles de catalyseur est diminuée de 60%), le temps nécessaire pour obtenir le même taux de conversion est augmenté d'environ 60%. Ils présentent donc une activité comparable.

### 2) Obtention d'élastomère en présence d'une huile silicone, du silicate d'éthyle précondensé et d'un carbène NHC en solution à température ambiante.

Essai 5-a: On mélange 50g d'huile polydiméthylsiloxane α,ω-dihydroxylée de viscosité 14000 mPa.s avec 0,38 g de silicate d'éthyle précondensé à 14 mol d'OEt par kg (soit un ratio molaire OEt/OH = 2,92), et une composition catalytique selon l'invention formée avec 0.21 mmol de catalyseur carbène NHC-tBu en solution à 30% poids dans le méthanol, ce qui correspond à 0,09 mol de catalyseur carbène par mol de OH. On obtient immédiatement après le mélange un gel qui conduit à un élastomère collant et pâteux.

Essai 5-b : On mélange 50g d'huile polydiméthylsiloxane α,ω-dihydroxylée de viscosité de 14000 mPa.s et 0,38 g de silicate d'éthyle précondensé à 14 mol d'OEt par kg (soit un ratio molaire OEt/OH = 2,92) et 0.043 mmmol de catalyseur carbène NHC-tBu en solution à 30% poids dans le méthanol. On obtient un gel avec un pot life de 1 à 2h, qui conduit à un élastomère élastique, collant et transparent.

Si on remplace le carbène NHC-tBu en solution à 30% poids dans le méthanol par la même quantité molaire de carbène NHC-Cy (1,3-dicyclohexylimidazolylydène en solution méthanolique) le même résultat est obtenu.

Une quantité très faible de catalyseur selon l'invention est suffisante pour catalyser la polycondensation et obtenir un élastomère.

D'autres essais ont été réalisés en diminuant la quantité de réticulant, de façon à avoir un rapport OEt/OH initial inférieur à 1 : Le pot life est identique, entre 1 et 2h, les élasticités sont plus importantes, mais dans tous les cas, le matériau obtenu est un gel transparent, élastique, souple et collant dont les caractéristiques sont stables au bout de quelques jours.

Essai 5-c : On mélange 50g d'huile polydiméthylsiloxane α,ω-dihydroxylée de viscosité de 14000 mPa.s et 0,27 g de silicate d'éthyle précondensé à 14 mol d'OEt par kg (ratio molaire OEt/OH = 0.9) et 0,043 mmmol de catalyseur carbène NHC-tBu en solution à 30% poids dans le méthanol. On obtient un gel avec un pot life de 1 à 2h, qui conduit à un élastomère élastique, collant et transparent.

Essai 5-d: On mélange 50g d'huile polydiméthylsiloxane α,ω-dihydroxylée de viscosité de 14000 mPa.s et 0,095 g de silicate d'éthyle précondensé à 14 mol d'OEt par kg (ratio molaire OEt/OH = 0.73) et 0,043 mmmol de catalyseur carbène NHC-tBu en solution à 30% poids dans le méthanol ce qui correspond à. On obtient un gel avec un pot life de 1 à 2h, qui conduit à un élastomère élastique, collant et transparent.

### 3) Déshydropolycondensation catalysée par les carbènes N-hétérocycliques (NHC) à température ambiante

Deux compositions catalytiques ont été préparée à partir:
- d'un carbène N-hétérocyclique-tBu (NHC-tBu) pur cristallisé et en solution méthanolique (30%p), et
- d'un carbène NHC-Cy en solution éthanolique (40%p) ou méthanolique (31%p).

### Essai 6 : Huile polydiméthylsiloxane α,ω-dihydroxylée de viscosité 100 mPa.s et carbène NHC -tBu en cristaux

On met une huile polydiméthylsiloxane α,ω-dihydroxylée de viscosité 100 mPa.s en présence de 0,5%p de NHC-tBu en cristaux (0.28mmol pour 10g d'huile) sous agitation à température ambiante pour obtenir une réaction de déshydrocondensation. Le milieu devient trouble après 30 minutes d'agitation, l'agitation s'arrête au bout d'une heure (montée de la viscosité) et après 24h une gomme de très forte viscosité (non mesurable mais supérieure à 200000 mPa.s) est obtenue.

### Essai 7 : Huile polydiméthylsiloxane α,ω-dihydroxylée de viscosité 100 mPa.s et carbène NHC-Cy en solution éthanolique

On utilise les mêmes conditions expérimentales que l'essai 6 à l'exception de la composition catalytique, qui est remplacé par une même quantité molaire de NHC-Cy en solution éthanolique (40% poids). Après 24 h d'agitation à température ambiante on obtient une huile de viscosité 116000 mPa.s et après chauffage pendant 4h à 80°C une gomme de très forte viscosité (>200000 mPa.s mais non mesurable) est obtenue.

Le Tableau 2 suivant présente les caractéristiques des gommes obtenues selon les essais 1 et 2 analysés par chromatographie d'exclusion stérique (GPC).

**Tableau 2**

| | **Mp** | **Mn** | **Mw** | **PD** | **Composition massique** |
|---|---|---|---|---|---|
| Huile PDMS α,ω-dihydroxylée de viscosité 100 mPa.s | 5630 | 3410 | 7160 | 1,29 | 23% entre 63100 et 10000 |
| | | | | | 73% entre 10000 et 1000 |
| Gomme Essai 6 | 88310 | 24190 | 108770 | 4,5 | 39% entre 1155620 et 100000 |
| | | | | | 53% entre 100000 et 10000 |
| | | | | | 7% entre 10000 et 1000 |
| Gomme essai 7 | 238320 | 165100 | 381200 | 2,3 | 86% entre 4877500 et 100000 |
| | | | | | 14% entre 100000 et 10000 |

### Essai 8 : Huile polydiméthylsiloxane α,ω-dihydroxylée de viscosité 14000 mPa.s et carbène en solution méthanolique.

On met une huile polydiméthylsiloxane α,ω-dihydroxylée de viscosité 14000 mPa.s en présence d'une composition catalytique formée à partir de 0.1% poids de NHC-tBu en solution méthanolique (30% poids).
Le Tableau 3 suivant montre le suivi de viscosité du mélange (en mPa.s) obtenu avec l'essai 8 et le tableau 4 les résultats d'analyse par chromatographie d'exclusion stérique (GPC).

**Tableau 3**

| durée (h) | viscosité (mPa.s) |
|---|---|
| 0,0 | 15720 |
| 0,1 | 16100 |
| 0,3 | 17440 |
| 0,6 | 19000 |
| 0,9 | 21160 |
| 1,1 | 23250 |
| 2,1 | 32040 |
| 3,1 | 43560 |
| 3,6 | 48060 |
| 4,8 | 67320 |
| 6,0 | 85080 |
| 6,9 | 99360 |
| 20,9 | > 200000 |

**Tableau 4**

| **durée** | **Mp** | **Mn** | **MW** | **PD** | **Composition massique** |
|---|---|---|---|---|---|
| 0 | 54230 | 44900 | 73400 | 1,64 | 23% entre 735000 et 100000 |
| Huile PDMS α,ω-OH | | | | | 76% entre 100000 et 10000 |
| 24h | 109000 | 92600 | 203700 | 2,2 | 61,3% entre 2550500 et 100000 |
| | | | | | 38% entre 100000 et 10000 |
| 25 jours | 204000 | 157300 | 367600 | 2,3 | 82,5% entre 5370000 et 100000 |
| | | | | | 17.5% entre 100000 et 10000 |

### Essais 9 à 13 :

Pour chacun des essais, les constituants détaillés dans le tableau 5 ci-après ont été mélangés à température ambiante avec une composition catalytique formée à partir de 0,1% poids de carbène NHC-Cy (31%poids en solution méthanolique) soit 0,42mmol de NHC-Cy pour 100g de mélange.

Les différents constituants du Tableau 4 sont :
- une huile polydiméthylsiloxane α,ω-dihydroxylée de viscosité de 750 mPa.s notée "H750",
- une huile polydiméthylsiloxane α,ω-dihydroxylée de viscosité 14000 mPa.s, contenant 0,0324 mmol OH/g, notée "H14000" et
- une huile silicone hydroxylée ramifiée contenant au total 0,547 mmol d'OH/g et avec un rapport T^{OH}/D^{OH} = 7,72 notée "réticulant OH A".

L'essai 12 correspond à une stoéchiométrie entre les OH de l'huile H14000 et les OH du réticulant A, et l'essai 13 correspond à la stoéchiométrie de la totalité des D^{OH} présents (dans l'huile H14000 et le réticulant OH A) par rapport aux T^{OH} du réticulant OH A.

**Tableau 5**

| | | | | | |
|---|---|---|---|---|---|
| Essais | 9 | 10 | 11 | 12 | 13 |
| **H750** | | 80g | | | |
| **H14000** | | | 80g | 93,74g | 92g |
| **Réticulant OH A** | 100g | 20g | 20g | 6,26g | 8g |

Pour l'ensemble des essais 9 à 13 réalisés, le « pot life » ou temps de travail du mélange est supérieur à deux heures. Les caractéristiques des différents élastomères obtenus sont détaillées ci-après.
**Essai 9 :** gélifié élastique non collant à 18h, dur et friable ensuite
**Essai 10 :** gélifié faiblement collant à 18h, ferme peu collant à 3 jours, dur non collant à 7j.
**Essai 11 :** gélifié fortement collant et élastique à 18h, élastique très collant à 3j, dur collant à 7j et 14j.
**Essais 12 et 13 :** après 18h, gélifié mais huileux en surface, pellicule supérieure non réticulée après 3j, assez élastique et collant à 7j et 14j.

Une fraction des compositions des essais 9 à 13 a été étalée en couche mince dans des coupelles et portée à 120°C. Pour tous les essais, un élastomère réticulé non collant a été obtenu en moins de 5 minutes.

### Essais 14 à 19 :

Pour comparer l'activité des carbènes NHC-Cy (31%poids en solution méthanolique) et NHC-tBu (30%p en solution méthanolique), les constituants détaillés dans le tableau 6 ci-après ont été mélangés à température ambiante avec 0,21 mmol de carbène
Les différents constituants du tableau 6 sont l'huile « H14000 » décrite ci-dessus et une résine hydroxylée notée « réticulant OH B », contenant 0,303 mmol de OH par gramme. Les essais 16 et 17 sont à la stœchiométrie entre l'huile et la résine.

**Tableau 6**

| | | | | | | |
|---|---|---|---|---|---|---|
| Essai | 14 | 15 | 16 | 17 | 18 | 19 |
| **NHC-Cy** | x | | x | | x | x |
| **NHC-tBu** | | x | | x | | |
| **H14000** | 37,4g | 37,4g | 37,4g | 37,4g | 37,4g | 37,4g |
| **Réticulant OH B** | 2g | 2g | 4g | 4g | 8g | 12g |
| Pot life | 1h30 | 2h | 2h30 | 3h30 | 4h15 | 6h |

Le pot life ou temps de travail obtenu avec les différentes compositions varie entre lh30 et 6 heures. Les caractéristiques des différents élastomères obtenus sont détaillées ci-après.
**Essais 14 et 16 :** gel collant à 3h30, élastomère collant à 6h30, non collant à 22h.
**Essais 15 et 17 :** gel collant à 3h30, élastomère collant à 22h et 14 jours
**Essais 18 et 19 :** élastomères non collants à 22h

De la même façon que pour les essais 9 à 13, une fraction des compositions des essais 14 à 19 a été étalée en couche mince dans des coupelles et portée à 120°C. Pour tous les essais, un élastomère réticulé non collant a été obtenu en moins de 5 minutes.

Ces résultats montrent que les carbènes en solution alcoolique permettent une réaction entre une huile polydiméthylsiloxane α,ω-dihydroxylée et une résine à motifs D^{OH} et T^{OH} afin d'obtenir des élastomères en couche mince en quelques minutes à 120°C, quelque soit la résine à motifs siloxyles D^{OH} et T^{OH}, l'huile polydiméthylsiloxane α,ω-dihydroxylée et les proportions des 2.

Dans les motifs siloxyles D^{OH} et T^{OH} les substituants autre que la fonction hydroxyle sont des méthyles.

## Revendications

1. Composition **X** polymérisable ou réticulable par polycondensation ne comprenant pas de catalyseurs à base d'alkylétain, précurseur d'élastomère à base de silicone, comprenant:
- une base silicone **B** comprenant au moins une huile ou gomme polyorganosiloxane **C,** ladite huile ou gomme **C** étant (i) polymérisable ou réticulable par réaction de polycondensation et (ii) d'une viscosité dynamique comprise entre 10 mPa.s et 1,5x10⁶ mPa.s à 25°C; et,
- une composition catalytique **Y'** comprenant :
a) une quantité catalytiquement efficace d'au moins un catalyseur de polycondensation **A** qui est un carbène de formule (II) ou (II') suivante: 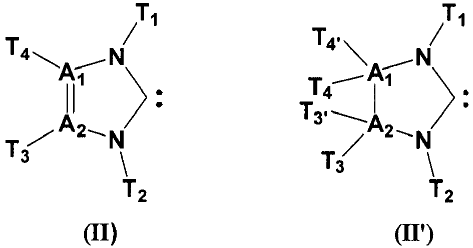 dans lesquelles :
- les symboles A₁ et A₂ représentent indépendamment un atome de carbone ou d'azote, étant entendu que:
1) dans la formule (II), lorsque le symbole A₁ représente un atome d'azote, alors le symbole T₄ n'est pas présent et lorsque le symbole A₂ représente un atome d'azote, alors le symbole T₃ n'est pas présent; et
2) dans la formule (II'), lorsque le symbole A₁ représente un atome d'azote, alors le symbole T₄ ou T_{4'} n'est pas présent et lorsque le symbole A₂ représente un atome d'azote N, alors le symbole T₃ ou T_{3'} n'est pas présent ;
- les symboles T₃, T_{3'}, T₄ et T_{4'} représentent indépendamment un atome d'hydrogène ; un groupement : alkyle, cycloalkyle éventuellement substitué par un groupe alkyle ou alkoxy; aryle éventuellement substitué par un groupe alkyle ou alkoxy, alcényle, alcynyle ou arylalkyle dans lequel la partie aryle est éventuellement substituée par un groupe alkyle ou alkoxy ;
- les symboles T₃ et T₄ peuvent former ensemble et avec A₁ et A₂ quand ceux-ci représentent chacun un atome de carbone, un aryle étant entendu que dans ce cas T_{3'} et T_{4'} ne sont pas présents;
- les symboles T₁, T₂, T₃, T_{3'}, T₄ et T_{4'} peuvent former deux à deux, lorsqu'ils sont situés sur deux sommets adjacents dans les formules (II) et (II'), une chaîne hydrocarbonée saturée ou insaturée, et
- les symboles T₁ et T₂ représentent indépendamment l'un de l'autre:
1) un groupement : alkyle, un cycloalkyle éventuellement substitué par un groupe alkyle, alkyle perfluoré ou éventuellement substitué par un groupement perfluoroalkyle, cycloalkyle éventuellement substitué par un groupe alkyle ou alkoxy; aryle éventuellement substitué par un groupe alkyle ou alkoxy, alcényle, alcynyle ou arylalkyle dans lequel la partie aryle est éventuellement substituée par un groupe alkyle ou alkoxy ; ou
2) un radical monovalent de formule (IV) suivante :
-V1-V2 (IV)
dans laquelle:
- V1 est un groupement divalent hydrocarboné saturé ou non, de préférence un alkylène linéaire ou ramifié en C₁-C₁₀, éventuellement substitué, et
- V2 est un groupement monovalent choisi dans le groupe constitué par les substituants suivants :
- alcoxy, -OR^{a} avec le symbole R^{a} correspondant à un atome d'hydrogène ou un groupement alkyle ou aryle ;
- silyl, -Si(OR^{b})ₓ(R^{c})₃₋ₓ avec le symbole R^{b} correspondant à un atome d'hydrogène, un groupement alkyle, silyle ou siloxanyle, avec le symbole R^{c} correspondant à un groupe alkyle ou aryle et le symbole x étant un nombre entier égal à 0, 1, 2 ou 3; et
- amine, de préférence -N(R^{a})₂ avec le symbole R^{a} correspondant à un atome d'hydrogène ou à un groupement alkyle ou aryle et
b) au moins un solvant comprenant au moins un alcool **G.**

2. Composition **X** selon la revendication 1 dans laquelle l'alcool **G** à pour formule R°OH, dans laquelle le symbole R° correspond à un groupement : alkyle, cycloalkyle, aryle, alcényle, alcynyle, arylalkyle, silyle ou siloxane, et de préférence le symbole R° est choisi parmi le groupe constitué par : un méthyle, un éthyle, un propyle et un butyle.

3. Composition **X** selon la revendication 1 **caractérisée en ce que** l'huile polyorganosiloxane **C** est un polymère α,ω-dihydroxydiorganopolysiloxane dont les radicaux organiques sont des radicaux hydrocarbonés, de préférence choisi parmi le groupe constitué par: les alkyles ayant de 1 à 20 atomes de carbone, les cycloalkyles ayant de 3 à 8 atomes de carbone, les alcényles ayant de 2 à 8 atomes de carbone et les cycloalcényles ayant de 5 à 8 atomes de carbone.

4. Composition **X** selon l'une quelconque des revendications précédentes, **caractérisée en ce que** la base silicone **B** comprend en outre :
- au moins un agent de réticulation **D;**
- éventuellement, au moins un promoteur d'adhérence **E;** et
- éventuellement au moins une charge minérale siliceuse, organique et/ou non siliceuse **F.**

5. Composition **X** selon la revendication 1, **caractérisée en ce que** l'huile polyorganosiloxane **C** comprend au moins deux groupes fonctionnels de type hydroxy, alcoxy, oxime, acyle et /ou énoxy, et de préférence au moins deux groupes fonctionnels silanol.

6. Composition **X** selon la revendication 4 **caractérisée** ce que l'agent de réticulation **D** est choisi parmi le groupe constitué par:
- le vinyltriméthoxysilane,
- le vinyltriéthoxysilane,
- le méthyltriéthoxysilane,
- le propyltriéthoxysilane,
- le tétraéthoxysilane,
- le 1,2-bis(triéthoxysilyl)éthane,
- C₂H₅Si(OC₂H₅)₃, et
- Si(OC₂H₅)₄.

7. Composition **X** selon la revendication 4 **caractérisée** ce que l'agent de réticulation **D** est une résine silicone **H** dont la teneur pondéral en fonction hydroxyle est comprise entre 0,1 et 20% en poids.

8. Composition **X** selon la revendication 4 **caractérisée en ce que** l'agent de réticulation **D** est une résine silicone **H** à fonctions silanol comprenant par molécule au moins un motif siloxyle M = R'₃SiO_{1/2} et/ou un motif siloxyle D = R'₂SiO_{2/2} en association avec au moins un motif siloxyle T = R'SiO_{3/2} et/ou un motif siloxyle Q = SiO_{4/2} ; les radicaux R' étant choisis parmi le groupe constitué par les groupements méthyle, éthyle, isopropyle, tertiobutyle et n-hexyle.

9. Elastomère obtenu par réticulation ou durcissement d'une composition **X** précurseur telle que définie selon l'une quelconque des revendications 4 à 8.

10. Utilisation d'au moins une composition catalytique **Y'** telle que définie selon la revendication 1 pour la synthèse d'élastomères silicone à partir d'une base silicone comprenant une huile ou gomme **B** polymérisable ou réticulable par réaction de polycondensation et d'une viscosité dynamique à 25°C comprise entre 10 mPa.s et 1,5x10⁶ mPa.s.

11. Procédé de préparation d'un support enduit **Y** comprenant les étapes a), b) et c) suivantes :
a) on prépare une composition **X** précurseur d'élastomère à base de silicone telle que définie selon l'une quelconque des revendications 1 à 8,
b) puis on dépose de manière continue ou discontinue ladite composition **X** précurseur d'élastomère à base de silicone sur un support souple S qui est en textile, en papier, en polychlorure de vinyle, en polyester, en polypropylène, en polyamide, en polyéthylène ou en polyuréthanne, et
c) on laisse réticuler ladite composition silicone **X,** éventuellement en chauffant à une température comprise entre 40°C et 130°C, de manière à durcir la composition silicone **X** et ainsi obtenir le support enduit **Y.**

12. Procédé selon la revendication 11, **caractérisé en ce que** la composition **X** précurseur d'élastomère à base de silicone comprend :
- au moins une huile ou gomme polyorganosiloxane **C,** ladite huile ou gomme **C** étant (i) réticulable par réaction de polycondensation et (ii) d'une viscosité dynamique comprise entre 10 mPa.s et 1,5x10⁶ mPa.s à 25°C; et
- un agent de réticulation **D** qui est une résine silicone dont la teneur pondéral en fonction hydroxyle est comprise entre 0,1 et 20% en poids.

13. Procédé selon l'une quelconque des revendications 11 et 12 dans lequel le support enduit **Y** est un pansement.

## Patentansprüche

1. Mittels Polykondensation polymerisierbare oder vernetzbare Zusammensetzung X, die keine Katalysatoren auf Basis von Alkylzinn umfasst und eine Elastomervorstufe auf Basis von Silikon ist, umfassend:
- eine Silikonbasis B, die mindestens ein Polyorganosiloxanöl oder einen Polyorganosiloxangummi C umfasst, wobei das Öl oder der Gummi C (i) über eine Polykondensationsreaktion polymerisierbar oder vernetzbar ist und (ii) eine dynamische Viskosität zwischen 10 mPa.s und 1,5x10⁶ mPa.s bei 25°C aufweist; und
- eine katalytische Zusammensetzung Y', umfassend:
a) eine katalytisch wirksame Menge von mindestens einem Polykondensationskatalysator A, der ein Carben mit der folgenden Formel (II) oder (II') ist: 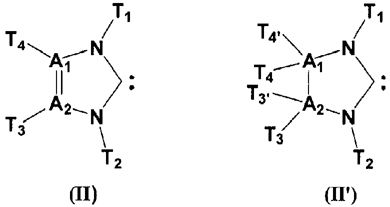 worin:
- Symbol A₁ und A₂ unabhängig für ein Kohlenstoff- oder Stickstoffatom stehen, wobei:
1) in der Formel (II), wenn Symbol A₁ für ein Stickstoffatom steht, Symbol T₄ nicht vorhanden ist, und wenn Symbol A₂ für ein Stickstoffatom steht, Symbol T₃ nicht vorhanden ist; und
2) in der Formel (II'), wenn Symbol A₁ für ein Stickstoffatom steht, Symbol T₄ oder T_{4'} nicht vorhanden ist, und wenn Symbol A₂ für ein Stickstoffatom N steht, Symbol T₃ oder T_{3'} nicht vorhanden ist;
- Symbol T₃, T_{3'}, T₄ und T_{4'} unabhängig für ein Wasserstoffatom, eine Alkylgruppe, eine gegebenenfalls mit einem Alkylrest oder Alkoxyrest substituierte Cycloalkylgruppe, eine gegebenenfalls mit einem Alkyl- oder Alkoxyrest substituierte Arylgruppe, eine Alkenyl- , Alkinyl- oder Arylalkylgruppe steht, wobei der Arylteil gegebenenfalls mit einem Alkyl- oder Alkoxyrest substituiert ist;
- Symbol T₃ und T₄ gemeinsam und mit A₁ und A₂, wenn diese jeweils für ein Kohlenstoffatom stehen, ein Aryl bilden können, wobei in diesem Fall T_{3'} und T_{4'} nicht vorhanden sind;
- Symbol T₁, T₂, T₃, T_{3'}, T₄ und T_{4'} paarweise, wenn sie sich in Formel (II) und (II') an zwei nebeneinanderliegenden Ringgliedern befinden, eine gesättigte oder ungesättigte Kohlenwasserstoffkette bilden können, und
- Symbol T₁ und T₂ unabhängig voneinander für Folgendes stehen:
1) eine Alkylgruppe, ein gegebenenfalls mit einem Alkylrest substituiertes Cycloalkyl, eine perfluorierte oder gegebenenfalls mit einem Perfluoralkylrest substituierte Alkylgruppe, eine gegebenenfalls mit einem Alkyl- oder Alkoxyrest substituierte Cycloalkylgruppe; eine gegebenenfalls mit einem Alkyl- oder Alkoxyrest substituierte Arylgruppe, eine Alkenyl- , Alkinyl- oder Arylalkylgruppe, wobei der Arylteil gegebenenfalls mit einem Alkyl- oder Alkoxyrest substituiert ist; oder
2) einen einwertigen Rest mit folgender Formel (IV):
- V1 - V2 (IV)
worin:
- V1 eine gesättigte oder ungesättigte zweiwertige Kohlenwasserstoffgruppe ist, vorzugsweise ein unverzweigtes oder verzweigtes, gegebenenfalls substituiertes C₁-C₁₀-Alkylen, und
- V2 eine einwertige Gruppe ist, die aus der Gruppe ausgewählt ist, die von folgenden Substituenten gebildet wird:
- Alkoxy, -OR^{a}, wobei Symbol R^{a} einem Wasserstoffatom oder einer Alkyl- oder Arylgruppe entspricht;
- Silyl, -Si(OR^{b})ₓ(R^{c})₃₋ₓ, wobei Symbol R^{b} einem Wasserstoffatom, einer Alkyl-, Silyl- oder Siloxanylgruppe entspricht, wobei Symbol R^{c} einem Alkyl- oder Arylrest entspricht und Symbol x eine ganze Zahl 0, 1, 2 oder 3 ist; und
- Amin, vorzugsweise -N(R^{a})₂, wobei Symbol R^{a} einem Wasserstoffatom oder einer Alkyl- oder Arylgruppe entspricht; und
b) mindestens ein Lösungsmittel, das mindestens einen Alkohol G enthält.

2. Zusammensetzung X nach Anspruch 1, wobei der Alkohol G die Formel R°OH aufweist, wobei Symbol R° einer Alkyl-, Cycloalkyl-, Aryl-, Alkenyl-, Alkinyl-, Arylalkyl-, Silyl- oder Siloxangruppe entspricht und Symbol R° vorzugsweise aus der Gruppe ausgewählt ist, die aus einem Methyl, einem Ethyl, einem Propyl und einem Butyl besteht.

3. Zusammensetzung X nach Anspruch 1, **dadurch gekennzeichnet, dass** das Polyorganosiloxanöl C ein α,ω-Dihydroxydiorganopolysiloxan-Polymer ist, dessen organische Reste Kohlenwasserstoffreste sind, vorzugsweise ausgewählt aus der Gruppe bestehend aus: Alkylen mit 1 bis 20 Kohlenstoffatomen, Cycloalkylen mit 3 bis 8 Kohlenstoffatomen, Alkenylen mit 2 bis 8 Kohlenstoffatomen und Cycloalkenylen mit 5 bis 8 Kohlenstoffatomen.

4. Zusammensetzung X nach einem der vorhergehenden Ansprüche, **dadurch gekennzeichnet, dass** die Silikonbasis B ferner umfasst:
- mindestens ein Vernetzungsmittel D;
- gegebenenfalls mindestens einen Haftvermittler E; und
- gegebenenfalls mindestens einen siliziumhaltigen mineralischen, organischen und/oder nicht siliziumhaltigen Füllstoff F.

5. Zusammensetzung X nach Anspruch 1, **dadurch gekennzeichnet, dass** das Polyorganosiloxanöl C mindestens zwei funktionelle Gruppen vom Typ Hydroxy, Alkoxy, Oxim, Acyl und/oder Enoxy und vorzugsweise mindestens zwei funktionelle Silanolgruppen umfasst.

6. Zusammensetzung X nach Anspruch 4, **dadurch gekennzeichnet, dass** das Vernetzungsmittel D aus der Gruppe ausgewählt ist, die aus Folgendem besteht:
- Vinyltrimethoxysilan,
- Vinyltriethoxysilan,
- Methyltriethoxysilan,
- Propyltriethoxysilan,
- Tetraethoxysilan,
- 1,2-bis(Triethoxysilyl)ethan,
- C₂H₅Si(OC₂H₅)₃ und
- Si(OC₂H₅)₄.

7. Zusammensetzung X nach Anspruch 4, **dadurch gekennzeichnet, dass** das Vernetzungsmittel D ein Silikonharz H ist, dessen Gewichtsanteil an Hydroxylgruppen zwischen 0,1 und 20 Gewichts-% beträgt.

8. Zusammensetzung X nach Anspruch 4, **dadurch gekennzeichnet, dass** das Vernetzungsmittel D ein Silikonharz H mit Silanolgruppen ist, das pro Molekül mindestens eine Siloxyleinheit M = R'₃SiO_{1/2} und/oder eine Siloxyleinheit D = R'₂SiO_{2/2} in Verbindung mit mindestens einer Siloxyleinheit T = R'SiO_{3/2} und/oder einer Siloxyleinheit Q = SiO_{4/2} umfasst; wobei die Reste R' aus der Gruppe ausgewählt sind, die aus der Methyl-, Ethyl-, Isopropyl-, Tertiobutyl- und n-Hexylgruppe besteht.

9. Elastomer, der durch Vernetzen oder Härten einer Vorstufenzusammensetzung X nach einem der Ansprüche 4 bis 8 erhalten ist.

10. Verwendung von mindestens einer katalytischen Zusammensetzung Y' nach Anspruch 1 für die Synthese von Silikonelastomeren aus einer Silikonbasis, die ein mittels Polykondensationsreaktion polymerisierbares oder vernetzbares Öl oder einen entsprechend polymerisierbaren oder vernetzbaren Gummi B umfasst, das bzw. der eine dynamische Viskosität bei 25°C zwischen 10 mPa.s und 1,5x10⁶ mPa.s aufweist.

11. Verfahren zur Herstellung eines beschichteten Trägers Y, das folgende Schritte a), b) und c) umfasst:
a) Herstellen einer Elastomervorstufenzusammensetzung X auf Silikonbasis nach einem der Ansprüche 1 bis 8,
b) anschließend kontinuierliches oder diskontinuierliches Aufbringen der Elastomervorstufenzusammensetzung X auf Silikonbasis auf einen flexiblen Träger S aus textilem Material, aus Papier, aus Polyvinylchlorid, aus Polyester, aus Polypropylen, aus Polyamid, aus Polyethylen oder aus Polyurethan, und
c) Vernetzenlassen der Silikonzusammensetzung X, gegebenenfalls durch Erwärmen auf eine Temperatur zwischen 40°C und 130°C, damit die Silikonzusammensetzung X gehärtet und so der beschichtete Träger Y erhalten wird.

12. Verfahren nach Anspruch 11, **dadurch gekennzeichnet, dass** die Elastomervorstufenzusammensetzung X auf Silikonbasis Folgendes umfasst:
- mindestens ein Polyorganosiloxanöl oder einen Polyorganosiloxangummi C, wobei das Öl oder der Gummi C (i) über eine Polykondensationsreaktion vernetzbar ist und (ii) eine dynamische Viskosität zwischen 10 mPa.s und 1,5x10⁶ mPa.s bei 25°C aufweist; und
- ein Vernetzungsmittel D, das ein Silikonharz ist, dessen Gewichtsanteil an Hydroxylgruppen zwischen 0,1 und 20 Gewichts-% beträgt.

13. Verfahren nach Anspruch 11 oder 12, wobei der beschichtete Träger Y ein Verband ist.

## Claims

1. Silicone-based elastomer precursor composition X polymerizable or crosslinkable by polycondensation and not comprising any alkyltin-based catalysts, comprising:
- a silicone base B comprising at least one polyorganosiloxane oil or gum C, said oil or gum C being (i) polymerizable or crosslinkable via a polycondensation reaction and having (ii) a dynamic viscosity of between 10 mPa.s and 1.5 x 10⁶ mPa.s at 25°C; and
- a catalytic composition Y' comprising:
a) a catalytically effective amount of at least one polycondensation catalyst A which is a carbene of formula (II) or (II') below: 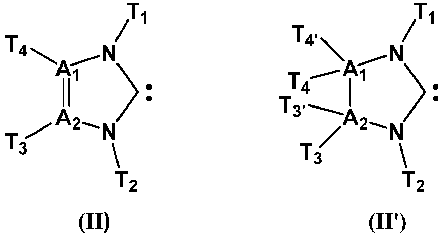 in which:
- the symbols A₁ and A₂ independently represent a carbon or nitrogen atom, it being understood that:
1) in formula (II), when the symbol A₁ represents a nitrogen atom, then the symbol T₄ is not present, and when the symbol A₂ represents a nitrogen atom, then the symbol T₃ is not present; and
2) in formula (II'), when the symbol A₁ represents a nitrogen atom, then the symbol T₄ or T_{4'} is not present, and when the symbol A₂ represents a nitrogen atom N, then the symbol T₃ or T_{3'} is not present;
- the symbols T₃, T_{3'}, T₄ and T_{4'} independently represent a hydrogen atom; or one of the following groups: alkyl, cycloalkyl optionally substituted with an alkyl or alkoxy group; aryl optionally substituted with an alkyl or alkoxy group, alkenyl, alkynyl or arylalkyl in which the aryl part is optionally substituted with an alkyl or alkoxy group;
- the symbols T₃ and T₄ can form, together and with A₁ and A₂ when the latter each represent a carbon atom, an aryl, it being understood that, in this case, T_{3'} and T_{4'} are not present;
- the symbols T₁, T₂, T₃, T_{3'}, T₄ and T_{4'} can form, in pairs, when they are located on two adjacent ring members in formulae (II) and (II'), a saturated or unsaturated hydrocarbon-based chain, and
- the symbols T₁ and T₂ represent, independently of one another:
1) one of the following groups: alkyl, a cycloalkyl optionally substituted with an alkyl group, alkyl which is perfluorinated or optionally substituted with a perfluoroalkyl group, cycloalkyl optionally substituted with an alkyl or alkoxy group; aryl optionally substituted with an alkyl or alkoxy group, alkenyl, alkynyl or arylalkyl in which the aryl part is optionally substituted with an alkyl or alkoxy group; or
2) a monovalent radical of formula (IV) below:
- V1 - V2 (IV)
in which:
- V1 is a saturated or unsaturated, divalent hydrocarbon-based group, preferably a linear or branched C₁-C₁₀ alkylene, which is optionally substituted, and
- V2 is a monovalent group chosen from the group consisting of the following substituents:
- alkoxy, -OR^{a} with the symbol R^{a} corresponding to a hydrogen atom or an alkyl or aryl group;
- silyl, -Si(OR^{b})ₓ(R^{c})₃₋ₓ with the symbol R^{b} corresponding to a hydrogen atom or an alkyl, silyl or siloxanyl group, with the symbol R^{c} corresponding to an alkyl or aryl group and the symbol x being an integer equal to 0, 1, 2 or 3; and
- amine, preferably -N(R^{a})₂ with the symbol R^{a} corresponding to a hydrogen atom or to an alkyl or aryl group and
b) at least one solvent comprising at least one alcohol G.

2. Composition X according to Claim 1, wherein the alcohol G has the formula R°OH, in which the symbol R° corresponds to one of the following groups: alkyl, cycloalkyl, aryl, alkenyl, alkynyl, arylalkyl, silyl or siloxane, and preferably the symbol R° is chosen from the group consisting of: a methyl, an ethyl, a propyl and a butyl.

3. Composition X according to Claim 1, **characterized in that** the polyorganosiloxane oil C is an α,ω-dihydroxydiorganopolysiloxane polymer, the organic radicals of which are hydrocarbon-based radicals, preferably chosen from the group consisting of: alkyls having from 1 to 20 carbon atoms, cycloalkyls having from 3 to 8 carbon atoms, alkenyls having from 2 to 8 carbon atoms and cycloalkenyls having from 5 to 8 carbon atoms.

4. Composition X according to any one of the preceding claims, **characterized in that** the silicone base B also comprises:
- at least one crosslinking agent D;
- optionally at least one adhesion promoter E; and
- optionally at least one siliceous, organic and/or non-siliceous mineral filler F.

5. Composition X according to Claim 1, **characterized in that** the polyorganosiloxane oil C comprises at least two functional groups of hydroxyl, alkoxy, oxime, acyl and/or enoxy type, and preferably at least two silanol functional groups.

6. Composition X according to Claim 4, **characterized in that** the crosslinking agent D is chosen from the group consisting of:
- vinyltrimethoxysilane,
- vinyltriethoxysilane,
- methyltriethoxysilane,
- propyltriethoxysilane,
- tetraethoxysilane,
- 1,2-bis(triethoxysilyl)ethane,
- C₂H₅Si(OC₂H₅)₃, and
- Si(OC₂H₅)₄.

7. Composition X according to Claim 4, **characterized in that** the crosslinking agent D is a silicone resin H, the hydroxyl function weight content of which is between 0.1% and 20% by weight.

8. Composition X according to Claim 4, **characterized in that** the crosslinking agent D is a silicone resin H with silanol functions comprising, per molecule, at least one siloxyl unit M = R'₃SiO_{1/2} and/or one siloxyl unit D = R'₂SiO_{2/2} in combination with at least one siloxyl unit T = R'SiO_{3/2} and/or one siloxyl unit Q = SiO_{4/2}; the radicals R' being chosen from the group consisting of methyl, ethyl, isopropyl, tert-butyl and n-hexyl groups.

9. Elastomer obtained by crosslinking or curing a precursor composition X as defined in any one of Claims 4 to 8.

10. Use of at least one catalytic composition Y' as defined in Claim 1, for the synthesis of silicone elastomers from a silicone base comprising an oil or gum B that is polymerizable or crosslinkable via a polycondensation reaction and that has a dynamic viscosity of between 10 mPa.s and 1.5 x 10⁶ mPa.s at 25°C.

11. Process for preparing a coated support Y comprising the following steps a), b) and c):
a) a silicone-based elastomer precursor composition X as defined in any one of Claims 1 to 8 is prepared,
b) said silicone-based elastomer precursor composition X is then deposited continuously or batchwise onto a flexible support S which is made of a textile, paper, polyvinyl chloride, polyester, polypropylene, polyamide, polyethylene or polyurethane, and
c) said silicone composition X is left to crosslink, optionally by heating at a temperature between 40°C and 130°C, so as to cure the silicone composition X and thus to obtain the coated support Y.

12. Process according to Claim 11, **characterized in that** the silicone-based elastomer precursor composition X comprises:
- at least one polyorganosiloxane oil or gum C, said oil or gum C being (i) crosslinkable via a polycondensation reaction and having (ii) a dynamic viscosity of between 10 mPa.s and 1.5 x 10⁶ mPa.s at 25°C; and
- a crosslinking agent D which is a silicone resin, the hydroxyl function weight content of which is between 0.1% and 20% by weight.

13. Process according to either one of Claims 11 and 12, wherein the coated support Y is a dressing.
